# EUROPEAN PATENT SPECIFICATION

(11) **EP 2 520 965 B1**
(45) Date of publication and mention of the grant of the patent: **02.09.2020**
(21) Application number: 11007031.5
(22) Date of filing: 14.09.2011
(51) Int. Cl.: G02B 21/00, G02B 27/58

(54) **Spatial resolution enhancements in multibeam confocal scanning systems**
Verbesserung der räumlichen Auflösung in mehrstrahligen konfokalen Abtastsystemen
Amélioration de la résolution spatiale dans les systèmes de lecture confocale multifaisceaux

(30) Priority: 06.05.2011 GB 201107556
(43) Date of publication of application: 07.11.2012
(73) Proprietor: VisiTech International Ltd., Sunderland, SR5 2TQ (GB)
(72) Inventor: SHEBLEE, Jafer, Sunderland SR5 2TQ (GB); COLEMAN, Steven, Sunderland SR5 2TQ (GB)
(74) Representative: Definition IP Limited

(56) References cited:
- US-A1- 2008 037 114
- CLAUS B. MÜLLER ET AL: "Image Scanning Microscopy", PHYSICAL REVIEW LETTERS, vol. 104, no. 19, 1 May 2010 (2010-05-01), XP55033474, ISSN: 0031-9007, DOI: 10.1103/PhysRevLett.104.198101
- HANS BLOM ET AL: "Blurry vision belongs to history", PHYSICS, vol. 3, 1 May 2010 (2010-05-01), XP55033914, ISSN: 1943-2879, DOI: 10.1103/Physics.3.40

## Description

### TECHNICAL FIELD

The present invention relates to improving the spatial resolution of images captured using multi-beam scanning confocal imaging systems by developing the mechanisms required in a variety of multi-beam confocal scanner formats that enable the data capture requirements of the prior art calculations to be met.

### DESCRIPTION OF THE PRIOR ART

Attempts at improving spatial image resolution beyond the Abbe resolution limit in wide field and confocal imaging systems have used structured illumination methods combined with manipulation of the Fourier representation of those images (Mueller and Enderlein, Physical Review Letters 104, 198101 (2010)). These attempts have been targeted at traditional single beam scanning confocal systems and have not been applied to multi-beam confocal scanning systems because the latter systems do not inherently contain the necessary elements or the precision of step by step scanning or synchronisation between elements to obtain the data required for the calculations.

In the prior art a single point scanning confocal system is made to scan a focused laser illumination beam step by step over a sample; and an image of a region of interest (ROI) Spq is captured at each stationary beam scan position producing an array of pixel intensities I(Spq) for each scan position Rj,k. The distance between spatially adjacent scan positions on each coordinate axis is substantially less than the native optical resolution of the confocal system and typically a sub-multiple of the pixel dimensions of the detector. The data from the multiple ROIs is processed to produce an effective image Ieff(Rjk) = summation of intensities for all p,q of I(Rjk-(Spq/2), Spq); the effective image Ieff(Rjk) is further processed by Fourier transformation, filtered with a weighting function equivalent to an enhanced point spread function (PSF), then reverse Fourier transformed into a spatial equivalent to produce a final image which exhibits enhanced spatial resolution. Full details of this data processing are given in the reference (Mueller and Enderlein).

### BACKGROUND OF THE INVENTION

There is a class of confocal imaging systems which use multi-beam scanning techniques to increase the speed of image capture over the traditional single beam scanners. Such systems use multiple parallel beams that scan the sample simultaneously. Multi-beam scanners come in a variety of forms, for example, those based on Nipkow spinning discs (for example US patent 5,428,475), 1-D array (sometimes called swept field) (for example US patent 6,856,457) or 2-D array (for example PCT WO 03/075070) scanners. Further prior art can be found in Hans Blom et al.: "Blurry vision belongs to history", Physics, vol. 3, 1 May 2010, and US 2008/037114 A1.

Nipkow disc based systems may use a single disc, spinning on its central axis, and contain an array of apertures placed in a conjugate image plane such that the illumination source is divided into multiple scanning beams and in which the return fluorescent or reflected light that passes through the same, or an identical set of apertures (as in tandem scanning confocal systems, for example US patent 4,802,748), forms a confocal image. An enhancement of the basic Nipkow disc arrangement patented by Yokogawa Electric Corporation, Japan, adds a second disc to the first such that the second disc contains an array of microlenses, positioned such that each aperture has an associated microlens. This second disc is inserted between the first disc and the light source, such that each of the microlenses collects the illumination light from a larger area and focuses it into its associated aperture, thus improving the efficiency of the illumination path. A dichromatic mirror, or beam splitter, placed between the two discs separates the emission, fluorescent or reflected, light from the illumination light and reflects it out from between the two discs.

Swept field scanners use a 1 -dimensional array of illumination apertures, with or without an associated microlens array, which is scanned rapidly back and forth across the sample while a piezo transducer oscillates the scanning lines of the one dimensional array along the axis of the array with an amplitude equal to the separation of the apertures in the 1-D array. The period of the piezo oscillation is typically half that of the framing rate of the image capture device, such that each half period scans the whole sample field of view.

2-D array scanners use a single oscillating galvanometer mirror to scan a 2-D array of illumination apertures, with or without an associated microlens array, back and forth across the sample; each sweep completing a full scan of the sample.

The fluorescent light returned in both the swept field and 2-D array scanners is de-scanned by the scanning mirror, separated from the illumination light by a suitable dichroic mirror and focused on to an array of imaging apertures matching the pattern positions of the array of illumination apertures in a conjugate focal plane. These systems also make use of microlens arrays positioned in the illumination path such that the focus plane of the points of light so generated are focused as diffraction limited spots in the conjugate sample plane with or without passing through apertures in the illumination path.

Multi-beam scanning systems offer several useful advantages over single spot scanners, for example, faster scanning of the sample area enabling higher image capture rates to be achieved; and reduced photo-bleaching of the sample material with consequent reduction in phototoxic effects especially when applied to the imaging of living cells in life science research. Consequently improved spatial image resolution in these systems is also highly desirable. This invention shows how multi-dimensional confocal scanners can be adapted to meet the stringent scanning requirements and collect and process the data into the form required by the prior art for two-dimensional image resolution enhancement. The invention is defined by the appended claims.

### SUMMARY OF THE INVENTION

This invention provides for improving the spatial resolution of images captured using multi-beam confocal scanning systems by developing the mechanisms required in a variety of multi-beam confocal scanner formats that enable the data capture requirements of the prior art calculations to be met.

Each of the beams in a multi-beam scanning system can be considered as an individual single beam scanner, provided that there is sufficient spatial separation between any pair of adjacent beams and the beams are focused into diffraction limited spots in the sample focal plane. These conditions have to be met for successful normal operation of such confocal systems and therefore can be assumed to exist in all practical multi-beam confocal scanning systems.

Each beam, or focused scanning spot of illumination, forms a special case of a structured illumination in which all Fourier components supported by the imaging optics are present (Mueller and Enderlein). In normal operation, the scanning of these multiple beams or spots is continuous and the fluorescent, or reflected, light returned from the illuminated spots in the sample focus plane is focused on to a set of confocal apertures arranged such that every illumination spot has its own confocal aperture in a conjugate focal plane and the light which passes through the confocal apertures forms a confocal image in yet another conjugate focal plane. Typically, a 2-dimensional detector, for example, a CCD camera, is placed in this focal plane (or in an optically relayed duplicate of it) to record the confocal image. Such confocal images are substantially limited in resolution by the Abbe resolution limit.

If the array of illumination spots is made to sequentially step through a scan pattern rather than scan continuously, and an image is captured at each step position, each of the images so captured can be divided into an array of sub images or ROIs, a sub array or ROI being centred on the current image position of each of the illumination spots.

The present invention defines the means by which this image data may be collected for processing by the methods defined in the prior art by Mueller and Enderlein in that the intensity data contained in each ROI from a series of images that together form a complete scan of the sample is processed to create an intermediate image having an improved resolution. The intermediate image is Fourier transformed, filtered with a weighting function based on an improved point spread function (PSF) and reverse Fourier transformed to create the final image containing further resolution enhancement.

The requirement of the prior art is to scan the sample point by point with increments smaller than the optical resolution limit of the optical system in two orthogonal directions in the sample focal plane of the confocal scanning microscope system. This requirement is not met by current multibeam confocal scanning microscope systems. The present invention describes methods by which the various forms of multibeam confocal scanning systems may be modified to achieve this requirement.

1-D or swept field confocal scanners require additional means to produce the required positional accuracy of the scanning mechanisms on both axes and to obtain the level of synchronisation required between the scanning mechanisms and the image capture by the 2-D detector.

Nipkow disc and 2-D array confocal scanners require additional means to move the scan orthogonal to their basic scanning direction in order to generate the additional data required for the calculations required to create the improved resolution images. Such additional means can take various forms and has to deflect the scan in sub optical resolution dimensions with a total range of movement of the same order of magnitude as the native optical resolution of the target system.

The inclusion of devices to move both the microlens and pinhole arrays by equivalent amounts provides one method which suits both the 1-D and 2-D array scanners.

Moving the scan of a Nipkow disc scanner in a radial direction across the sample field of view can be achieved by a variety of methods, for example moving the centre of rotation of the rotating disc(s) using displacement devices such as a piezo displacement device or a linear motor. An alternative solution is to deflect the scanning beams and this can be achieved by inserting an optical window into the optical path between the confocal scanner and the microscope and tilting the window such that the scanning beams are deflected by refraction at the air/window and window/air interfaces by an amount determined by the angle of tilt and the thickness of the window. Yet another solution is the insertion and removal of a tilted, or tilting, window in the optical path to provide the necessary displacements orthogonal to the scan direction. Due to the reciprocal nature of the optical path, the fluorescent, or reflected, light returned from the sample on the microscope is deflected by an identical amount and hence no change in position of the microlens or pinhole arrays relative to the optical path is required providing that compensation means are included for chromatic aberrations.

1-D and 2-D array scanners may also use the technique of including a tilting optical window in the optical path between the confocal scanner and the microscope to shift the scanning beams.

Another solution requires that the array of points in the spinning disc and in the 2-D array scanner are arranged such that subsets of scanned points within the scan pattern are displaced by sub native optical resolution distances orthogonal to the scanning direction, in this case no additional displacement mechanism is required, it remains to identify the scan positions of the relative subsets of points so that the appropriate ROI images can be used in the subsequent calculations. This solution requires no additional optics in the beam path and is computationally efficient when the sub-optical resolution scanning increment is arranged to match a sub-multiple of the detector pixel size.

In the Nipkow disc type of confocal scanner, the rotational position of the discs must be known to a sufficiently precise degree such that the relative image points required by the prior art calculations can be identified with sufficient accuracy. The angular position can be identified by techniques such as adding an encoding mechanism to the rotation of the discs. This can be a separate encoding module attached to the shaft or its motor drive, or an encoding pattern (optical, mechanical, magnetic, etc.,) placed directly on one or both discs, and combined with a suitable encoder detection device.

In the 2-D array scanner additional positional accuracy can be obtained by implementing such methods as closed loop control techniques to the drive of the scanning mirror. It is also necessary to ensure that the drive signal to the scanning mirror has the necessary resolution and accuracy to enable sufficiently small incremental scanning steps.

Using the above techniques the required image data can be collected by methods such as stepping the scan, position by position, over the sample area and capturing an image at each step; alternatively, images may be collected while scanning 'on the fly' by strobing the illumination and / or gating the detector at each required scan position.

The ability to collect the intensity data in parallel from multiple ROIs when using multi beam scanners significantly improves the speed of image (i.e. data) capture. The ability of modern computer systems with parallel operation of multiple and multi-core CPUs and multi-threaded software provides suitable environments for efficient use of the increased data capture rates and offers the potential for real time imaging with enhanced spatial resolution.

### BRIEF DESCRIPTION OF THE DRAWINGS

Fig 1A Nipkow disc confocal configuration showing encoder arrangement on the rotating disc and a tilting window
Fig 1B Nipkow disc confocal configuration showing encoder on rotating shaft and a galvanometer
Fig 2A Illustrates spiral parameters for spinning disc confocal configuration
Fig 2B Illustration of spiral arrangements
Fig 3A Illustrates 1-D swept field parameters
Fig 3B Illustrates a configuration for a 1-D confocal scanner with tilting window
Fig 4 Illustrates phase shifted patterns in 2-D array confocal configuration
Fig 5A Illustrates tilted mirror in 2D array confocal configuration
Fig 5B Illustrates additional galvanometer in 2D array confocal configuration
Fig 5C Illustrates moving the arrays in 2D array confocal configuration
Fig 6 Identifies the references for data manipulation

### DESCRIPTION OF PREFERRED EMBODIMENTS

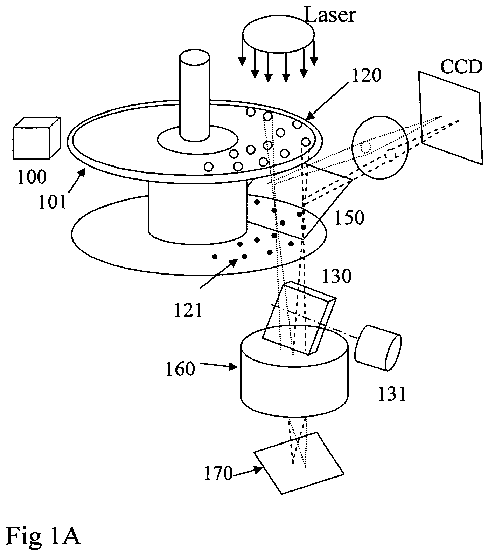

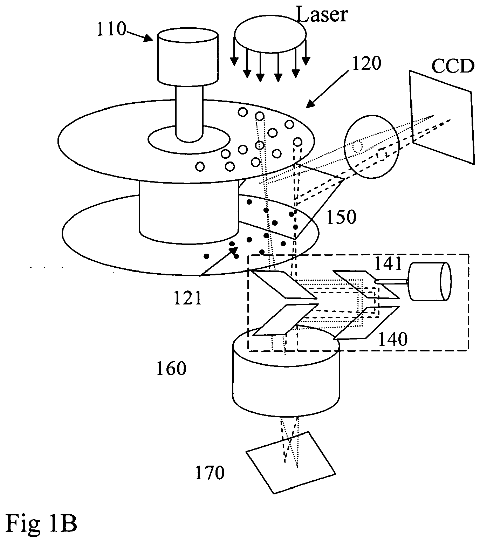

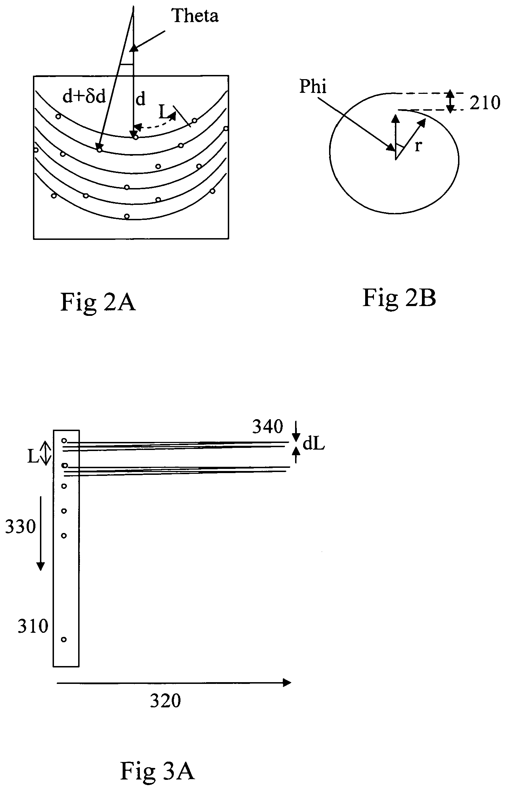

In a typical Nipkow disc configuration (Figs 1A and 1B) an expanded laser beam illuminates the field of view of the sample 170 after passing through a microlens array disc 120, a dichroic mirror 150 mounted between the microlens and pinhole discs, a pinhole array disc 121 and the microscope optics 160. The matching patterns of microlenses on 120 and pinholes on 121 are constructed as a number of interleaved spiral patterns (Fig 2B) where the separation distance 210 between the start and end of one spiral is filled with N other identical spirals. Therefore in one rotation of the discs, the image is scanned N times. The microlenses and pinholes are typically arranged on the spirals such that the separation distance between them along the spiral is the same as the separation distance between spirals to maintain a uniform area density of microlenses and pinholes. The positions of the microlenses and pinholes on each spiral can be described by the polar coordinates r,phi (Fig 2B). To achieve sub native optical resolution positioning of the microlenses and pinholes the rotation angle Theta (Fig 2A) must be monitored and used to determine when an image should be captured. The rotation angle can be determined by several methods. Fig 1A shows an encoder track 101, which may be magnetic or optical and read by a suitable detector 100. Fig 1B shows an encoder 110 mounted on the drive shaft or motor driving the discs.

Sub native optical resolution spacing between the scanned tracks of the microlenses and pinholes can be obtained by using techniques such as that described in Fig1A where a thick optical window 130 is inserted into the optical path between the confocal head and the microscope and tilts about an axis perpendicular to the radius of the disc at the centre of the field of view. The optical window can be tilted by devices such as a precision stepper or piezo motor 131, thus shifting the path of the spirals by sub native optical resolution spacing. Another method is to insert a galvanometer mirror into the beams between the confocal scanner and the microscope, other positions of the galvo are posssible provided that the optical path is suitably modified. One such implementation is described in Fig 1B showing the beam path extended by an array of mirrors (140) which includes a galvanometer mirror 141. Yet another method is to make the spiral patterns identical but shifted in phase such that the tracks made by the microlenses and pinholes in one spiral do not duplicate the tracks made by the microlenses and pinholes in any other spiral. This introduces N-1 additional tracks with the same spiral separation, which is sufficient to introduce sub native optical resolution δd between adjacent tracks, where δd is equal to original track spacing L divided by N tracks. In practical spinning disc systems the number of spirals is typically 12, shifting the phase for each one would provide spacing of L / 12, however, it would also be practical to have 2 repeats of 6 phase shifted spirals, or 3 repeats of 4 phase shifted spirals, etc., thus reducing the rate at which the disc needs to spin if the resulting separation of the tracks is still sub native optical resolution.

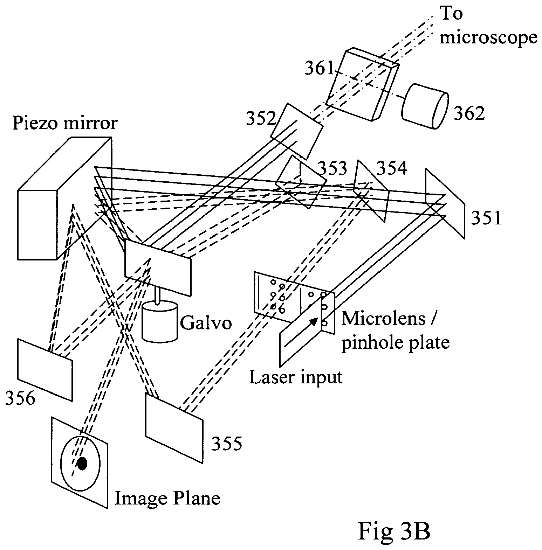

For a 1-D array scanning confocal configuration the scans are illustrated in Fig 3A (only partial scans are shown for clarity). The spatial filter array 310 (represented by the microlens / pinhole plate in Fig 3B) is rapidly scanned back and forth across the image in direction 320 (for example by a Galvo, Fig 3B) producing scan lines 340 separated by distance L equal to the aperture or microlens spacing in the spatial filter. The scanning of array 310 is also combined with an oscillation along its axis in direction 330 (for example by a piezo controlled mirror, Fig 3B) by an amount just less than the aperture separation (L-dL) such that the field of view is fully scanned in one capture interval of the image detection device. The distance dL and the separation between the oscillations can be identical and sub native optical resolution of the system and are conveniently set to be an integral sub-multiple of the microlens and pinhole spacing L. Scanning of the 1-D arrays may be made in a variety of ways, such as reflecting the arrays off two orthogonal galvanometer mirrors, by reflecting off piezo controlled mirrors, by physical displacement of the arrays in the confocal head, by adjustment of a motorized 362 tilted window 361 in the optical path between the confocal head and a microscope, or combinations of these methods. The illumination light path is from the laser input via mirror 351, piezo mirror, galvo mirror, dichroic 352, optional tilting window 361 to the microscope. The fluorescent or reflected light from the sample is reflected at the beam splitter or dichroic mirror 352, the mirror 353, de-scanned by the Galvo and Piezo mirror, mirror 354, passed through the pinholes in the Microlens/pinhole plate and via mirror 355 rescanned by the Piezo mirror and Galvo via mirror 356 to form an image of the sample at the Image Plane (Fig 3B).

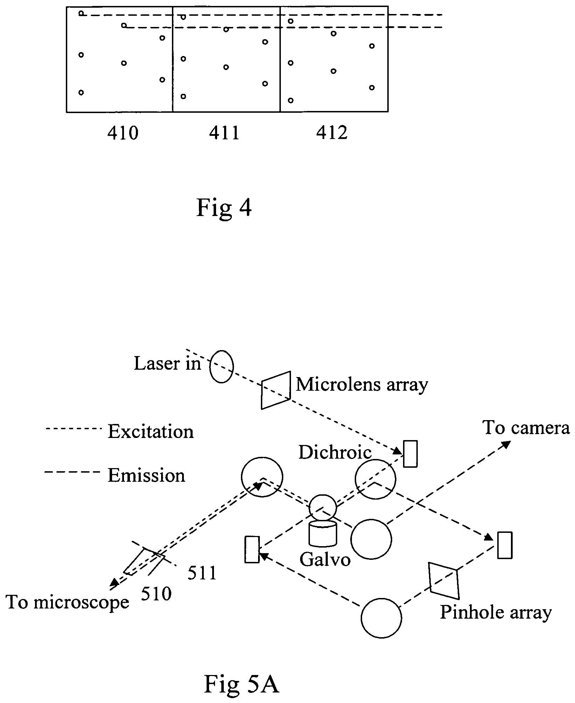

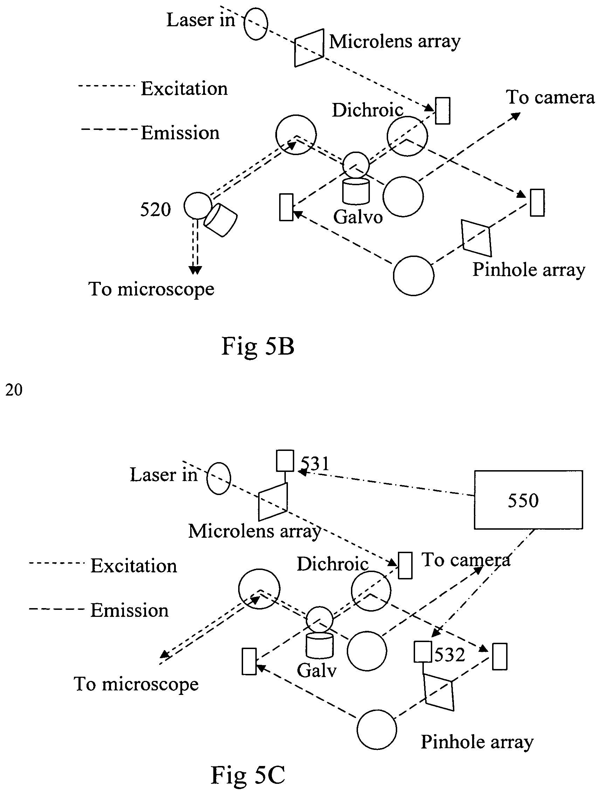

In a 2-D array scanning confocal system, the sub native optical resolution increments along the normal scanning direction can be set by precise control of the image scanning galvanometer. If only a single pattern of microlenses and pinholes is used for scanning then an additional mechanism is required to shift the scan in sub native optical resolution steps in the direction perpendicular to the normal scan direction. This can use techniques such as an additional galvanometer mirror 520 (Fig 5B) or an adjustable tilting thick optical window 510 (Fig 5A) placed in the optical path between the confocal head and a microscope and tilting about an axis 511 perpendicular to the normal scan direction; such tilted window can be driven by devices such as a galvanometer, stepper or piezo motor.

An alternative method requires a change to the microlens and pinhole arrays such that the pattern of microlenses and pinholes is extended, either to include additional pinholes that interleave with the existing pattern or including additional pattern repeats 410, 411, 412 (Fig 4), each repeat being phase shifted so as to produce interleaved scan lines whose separation is sub native optical resolution. Yet another method of achieving sub native optical resolution stepping is to physically displace both the microlens and pinhole arrays in a direction orthogonal to the normal scan direction (Fig 5C). For example, piezo, stepper, linear or rotational motors 531, 532 could be used to achieve this displacement. The potential disadvantage is that the movement of both arrays must be extremely precise to avoid relative displacements between the arrays which would seriously affect the confocal and resolution performance of the system. An electronic or computer control system 550 drives the precision motors 531, 532 in synchronism with the Galvo.

Each of the embodiments requires a means to synchronize the image capture to a stationary pattern of illumination spots in the sample. In the case of spinning disc configurations it is not trivial to drive the disc to a specific rotation angle and to step it to an adjacent angle quickly and accurately due to the inertial mass of the disc and its drive motor, etc., so a means of apparently stopping the disc motion is required. This may take the form of a stroboscopic control of the light source, where the illumination source, typically but not exclusively a laser, is turned on and off extremely rapidly. A laser light source may be modulated by direct modulation of a laser diode, by passing the laser beam through an electro-optic or acousto-optic device such as an AOM or AOTF, or a high speed shutter. An alternative method is to illuminate the sample continuously and to gate the detector, such that the detector exposure time is very short and effectively 'stops' the disc motion. The cue for each image capture is derived from the rotational position of the discs provided by an encoder device attached directly to the shaft of the discs or to the drive motor, or via an encoder track (magnetic or optical) formed on at least one of the discs and a suitable detection device that reads the encoded track.

The 1-D array scanner can be driven step by step on each axis, using any of the scan moving mechanisms detailed in the embodiments previously described, thus the image capture can be readily synchronized with these movements. It is also possible to continuously scan with the 1-D array scanner and use stroboscopic illumination or detector gating as described for the spinning disc embodiments.

The 2-D array scanner can also be driven step by step on each axis, using any of the scan moving mechanisms detailed in the embodiments previously described, thus the image capture can be readily synchronized with these movements. It is also possible to continuously scan with the 2-D array scanner and use stroboscopic illumination or detector gating as described for the spinning disc embodiments.

Each embodiment contains an electronic or computer subsystem that coordinates the movement of the scan, control of the illumination, the capture of the images, and the data processing steps.

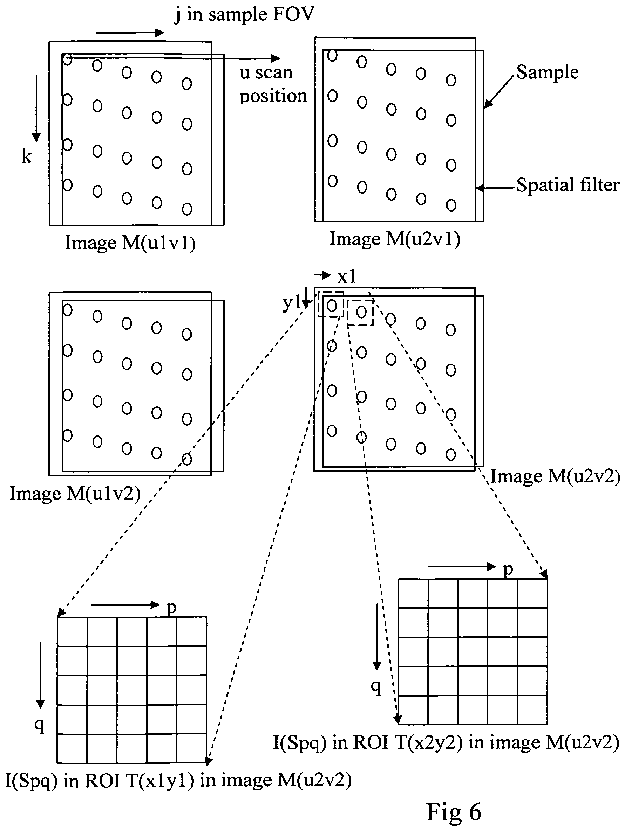

The data processing steps are described with reference to Figure 6 which represents an embodiment of the two-dimensional array scanner. The one-dimensional array scanner data is processed in the same manner as that from the two-dimensional array scanner, the difference is that the position of beams in the spatial filter has a single fixed value for one axis, say x. The spinning disc scanner can also be processed in the same manner, the difference being a conversion from the polar coordinates of the scanning and spatial filter positions into rectangular coordinates prior to testing for inclusion in the data to be passed to the prior art algorithm.

The sample in the field of view has coordinates j,k corresponding to the coordinates j,k in the prior art reference.

The multibeam spatial filter has coordinates of x,y for the positions of the microlens or pinhole elements in the filter.

The spatial filter scan position coordinates are u,v
For each scan position u,v an image is captured in which an array of ROIs T(x,y) is recorded. Each ROI has dimensions p,q and is centred on the coordinates x,y.

For each of the multi-beam scanner types, the ROIs centred on each beam position are captured simultaneously and the intensity data from the ROIs is loaded into the appropriate elements of the four-dimensional array I(R(u+x,v+y),Spq) according to the scan position u,v and ROI centre position x,y after testing that the values of u+x and v+y lie within the image field of view dimensions j and k respectively. Such computational processing may be carried out in parallel, thus improving the speed of creation of the array I(R(u+x,v+y),Spq) which is equivalent to the array I(Rjk,Spq) of the prior art reference. This equivalent array is processed according to the prior art to produce an image with enhanced spatial resolution.

In the case of spinning disc scanners the ROIs are centred on positions r,phi in the spatial filter. The position of the spatial filter is given by d, theta. These positions are converted from polar to rectangular coordinates before testing if they lie within j,k.

## Claims

1. A confocal scanning system in which a confocal image is generated by scanning a sample with multiple illuminating light beams created by a spatial filter in an illumination light path to a sample focal plane and a reflected or fluorescent light returned from the sample is filtered by a matching spatial filter to form a confocal image at a two dimensional detector
and **characterized in that**
an electronic or computer control system is integrated with the multibeam scanning system to synchronize and control the following events;
controlling the multi-beam illumination to appear stationary when an image is captured by the two dimensional detector at multiple positions u,v in a sample by synchronising image capture to a stationary pattern of illumination spots in the sample and capturing the image by the two dimensional detector at each stationary position forming an array of images Muv by:
incrementing a scan position step by step and capturing an image after each step, or
changing the scan position continuously and pulsing the illumination on and off in synchronism with required scan positions, thus effectively stopping the scan motion and enabling a snapshot image to be collected at each scan position, or
continuously changing the scan position and gating a detector on and off in synchronism with the required scan positions, thus enabling a snapshot image to be collected at each required scan position; and
a distance between spatially adjacent stationary scan positions u,v on any single or combined coordinate axis is arranged to be substantially less than a native optical resolution of the confocal scanning system; wherein
a region of interest (ROI) with pixel dimensions p,q is centred on each of the multiple returned beams from the sample at coordinates x,y in an image in the array of images Muv, forming an array of ROIs Txy; and repeated for each image in the image array Muv, such that the arrays of multiple returned beams at positions x,y shifted by the scan positions u,v cover the whole of the sample area j,k with illumination beams which are separated by substantially less than the native optical resolution of the confocal scanning system; and
pixel intensities I(Spq) recorded within each of the ROIs in the array of ROI arrays Txy at each stationary beam scan position u,v are loaded into the appropriate elements of the four-dimensional array I(R(u+x,v+y),Spq) according to the scan position u,v and ROI centre position x,y after testing that the values of u+x and v+y lie within the sample field of view dimensions j and k respectively, and
processed to produce an effective image, the effective image further processed by Fourier transformation, filtered with a weighting function equivalent to an enhanced point spread function, then reverse Fourier transformed into a spatial equivalent to produce a final image which exhibits enhanced spatial resolution, the effective image leff(Rjk) being equal to summation intensities for app p,q of I(Rjk-(Spq/2), Spq), wherein
the sub optical resolution increment on one or both axes is produced by:
precise and accurate control of one or more drive mechanisms each carrying a galvanometer scanning mirror, placed in the illumination and returning light beams, or
moving the illumination and detection spatial filters along their matching axes with precise and accurate control of one or more displacement mechanisms consisting of devices comprising one of a piezo displacement device, a linear motor, a stepper motor or a rotational motor on each array, or
precise and accurate control of one or more drive mechanisms, each controlling the tilt angle of a tilted optical window positioned in the illuminating and returning light beams by which the beams are shifted laterally by a change in the angle of tilt of the window.

2. A confocal scanning system in which a confocal image is generated by scanning a sample with multiple illuminating light beams created by a spatial filter in an illumination light path to a sample focal plane and a reflected or fluorescent light returned from the sample is filtered by a matching spatial filter to form a confocal image at a two dimensional detector
and **characterized in that**
an electronic or computer control system is integrated with the multibeam scanning system to synchronize and control the following events;
controlling the multi-beam illumination to appear stationary when an image is captured by the two dimensional detector at multiple positions u,v in a sample by synchronising image capture to a stationary pattern of illumination spots in the sample and capturing the image by the two dimensional detector at each stationary position forming an array of images Muv by:
incrementing a scan position step by step and capturing an image after each step, or
changing the scan position continuously and pulsing the illumination on and off in synchronism with required scan positions, thus effectively stopping the scan motion and enabling a snapshot image to be collected at each scan position, or
continuously changing the scan position and gating a detector on and off in synchronism with the required scan positions, thus enabling a snapshot image to be collected at each required scan position; and
a distance between spatially adjacent stationary scan positions u,v on any single or combined coordinate axis is arranged to be substantially less than a native optical resolution of the confocal scanning system; wherein
a region of interest (ROI) with pixel dimensions p,q is centred on each of the multiple returned beams from the sample at coordinates x,y in an image in the array of images Muv, forming an array of ROIs Txy; and repeated for each image in the image array Muv, such that the arrays of multiple returned beams at positions x,y shifted by the scan positions u,v cover the whole of the sample area j,k with illumination beams which are separated by substantially less than the native optical resolution of the confocal scanning system; and
pixel intensities I(Spq) recorded within each of the ROIs in the array of ROI arrays Txy at each stationary beam scan position u,v are loaded into the appropriate elements of the four-dimensional array I(R(u+x,v+y),Spq) according to the scan position u,v and ROI centre position x,y after testing that the values of u+x and v+y lie within the sample field of view dimensions j and k respectively, and
processed to produce an effective image, the effective image further processed by Fourier transformation, filtered with a weighting function equivalent to an enhanced point spread function, then reverse Fourier transformed into a spatial equivalent to produce a final image which exhibits enhanced spatial resolution, the effective image leff(Rjk) being equal to summation intensities for app p,q of I(Rjk-(Spq/2), Spq), wherein
image scanning is achieved by one or more rotating discs containing a spatial filter consisting of an array of confocal apertures, with or without a matching microlens array, and arranged such that one rotation of the disc assembly will cause the illuminating beams to scan the whole sample area at least once, wherein
the rotational scan is modified to sweep the illuminating beams across the sample in sub optical resolution increments along both axes, where (u,v) become (d, theta) of a combined radial displacement and rotational angle scan, with positions of apertures in the spatial filter described by (r,phi) in place of (x,y); and
the sub optical resolution scanning increment along the rotational axis is produced by precise knowledge of the rotational angle of the spinning disc(s) via methods comprising mounting a high resolution encoder on the shaft of the disc(s), on the drive motor shaft or encoding on the disc(s); and
the sub optical resolution scan increment along the radial displacement axis is produced by precise and accurate control of a drive mechanism carrying a scanning mirror; comrpising a galvanometer driven mirror, by precise and accurate control of the tilt angle of a tilted optical window positioned in the illuminating and returning light beams; or displacement of the centre of rotation of the spinning disc(s) subassembly with precise and accurate control of a displacement mechanism comprising a piezo displacement device, a linear motor, or a rotational motor.

3. A confocal scanning system in which a confocal image is generated by scanning a sample with multiple illuminating light beams created by a spatial filter in an illumination light path to a sample focal plane and a reflected or fluorescent light returned from the sample is filtered by a matching spatial filter to form a confocal image at a two dimensional detector
and **characterized in that**
an electronic or computer control system is integrated with the multibeam scanning system to synchronize and control the following events;
controlling the multi-beam illumination to appear stationary when an image is captured by the two dimensional detector at multiple positions u,v in a sample by synchronising image capture to a stationary pattern of illumination spots in the sample and capturing the image by the two dimensional detector at each stationary position forming an array of images Muv by:
incrementing a scan position step by step and capturing an image after each step, or
changing the scan position continuously and pulsing the illumination on and off in synchronism with required scan positions, thus effectively stopping the scan motion and enabling a snapshot image to be collected at each scan position, or
continuously changing the scan position and gating a detector on and off in synchronism with the required scan positions, thus enabling a snapshot image to be collected at each required scan position; and
a distance between spatially adjacent stationary scan positions u,v on any single or combined coordinate axis is arranged to be substantially less than a native optical resolution of the confocal scanning system; wherein
a region of interest (ROI) with pixel dimensions p,q is centred on each of the multiple returned beams from the sample at coordinates x,y in an image in the array of images Muv, forming an array of ROIs Txy; and repeated for each image in the image array Muv, such that the arrays of multiple returned beams at positions x,y shifted by the scan positions u,v cover the whole of the sample area j,k with illumination beams which are separated by substantially less than the native optical resolution of the confocal scanning system; and
pixel intensities I(Spq) recorded within each of the ROIs in the array of ROI arrays Txy at each stationary beam scan position u,v are loaded into the appropriate elements of the four-dimensional array I(R(u+x,v+y),Spq) according to the scan position u,v and ROI centre position x,y after testing that the values of u+x and v+y lie within the sample field of view dimensions j and k respectively, and
processed to produce an effective image, the effective image further processed by Fourier transformation, filtered with a weighting function equivalent to an enhanced point spread function, then reverse Fourier transformed into a spatial equivalent to produce a final image which exhibits enhanced spatial resolution, the effective image leff(Rjk) being equal to summation intensities for app p,q of I(Rjk-(Spq/2), Spq), wherein
image scanning is normally achieved by sweeping a spatial filter consisting of a one dimensional array of confocal apertures, with or without a matching microlens array, arranged such that the one dimensional array scan oscillates with an amplitude just less than the spacing between the apertures of the array, such that a half period of the oscillation containing multiple sweeps of the one dimensional array causes the illuminating beams to scan the sample area at least once, wherein
the positioning of the beams from the one dimensional array is made sufficiently precise and accurate to enable sub optical resolution stepping on either or both axes between successive image captures, by precise and accurate control of one or more drive mechanisms each carrying a scanning mirror placed in the illumination and returning light beams, comprising a galvanometer driven mirror or piezo controlled mirror.

4. A confocal scanning system in which a confocal image is generated by scanning a sample with multiple illuminating light beams created by a spatial filter in an illumination light path to a sample focal plane and a reflected or fluorescent light returned from the sample is filtered by a matching spatial filter to form a confocal image at a two dimensional detector
and **characterized in that**
an electronic or computer control system is integrated with the multibeam scanning system to synchronize and control the following events;
controlling the multi-beam illumination to appear stationary when an image is captured by the two dimensional detector at multiple positions u,v in a sample by synchronising image capture to a stationary pattern of illumination spots in the sample and capturing the image by the two dimensional detector at each stationary position forming an array of images Muv by:
incrementing a scan position step by step and capturing an image after each step, or
changing the scan position continuously and pulsing the illumination on and off in synchronism with required scan positions, thus effectively stopping the scan motion and enabling a snapshot image to be collected at each scan position, or
continuously changing the scan position and gating a detector on and off in synchronism with the required scan positions, thus enabling a snapshot image to be collected at each required scan position; and
a distance between spatially adjacent stationary scan positions u,v on any single or combined coordinate axis is arranged to be substantially less than a native optical resolution of the confocal scanning system; wherein
a region of interest (ROI) with pixel dimensions p,q is centred on each of the multiple returned beams from the sample at coordinates x,y in an image in the array of images Muv, forming an array of ROIs Txy; and repeated for each image in the image array Muv, such that the arrays of multiple returned beams at positions x,y shifted by the scan positions u,v cover the whole of the sample area j,k with illumination beams which are separated by substantially less than the native optical resolution of the confocal scanning system; and
pixel intensities I(Spq) recorded within each of the ROIs in the array of ROI arrays Txy at each stationary beam scan position u,v are loaded into the appropriate elements of the four-dimensional array I(R(u+x,v+y),Spq) according to the scan position u,v and ROI centre position x,y after testing that the values of u+x and v+y lie within the sample field of view dimensions j and k respectively, and
processed to produce an effective image, the effective image further processed by Fourier transformation, filtered with a weighting function equivalent to an enhanced point spread function, then reverse Fourier transformed into a spatial equivalent to produce a final image which exhibits enhanced spatial resolution, the effective image leff(Rjk) being equal to summation intensities for app p,q of I(Rjk-(Spq/2), Spq), wherein
image scanning is normally achieved by sweeping a spatial filter consisting of a two dimensional array of confocal apertures, with or without a matching microlens array, arranged such that a single sweep of the array causes the illuminating beams to scan the sample area at least once, wherein
the two dimensional array pattern of confocal apertures and matching illumination apertures and /or microlenses is modified such that the number of identical subpatterns is combined with a shift of each subpattern orthogonal to the normal scan direction to create a single scan sweep in which effectively adjacent scan lines through the sample plane by the illuminating beams are displaced from each other by a sub optical resolution distance.

5. A confocal scanning system in which a confocal image is generated by scanning a sample with multiple illuminating light beams created by a spatial filter in an illumination light path to a sample focal plane and a reflected or fluorescent light returned from the sample is filtered by a matching spatial filter to form a confocal image at a two dimensional detector
and **characterized in that**
an electronic or computer control system is integrated with the multibeam scanning system to synchronize and control the following events;
controlling the multi-beam illumination to appear stationary when an image is captured by the two dimensional detector at multiple positions u,v in a sample by synchronising image capture to a stationary pattern of illumination spots in the sample and capturing the image by the two dimensional detector at each stationary position forming an array of images Muv by:
incrementing a scan position step by step and capturing an image after each step, or
changing the scan position continuously and pulsing the illumination on and off in synchronism with required scan positions, thus effectively stopping the scan motion and enabling a snapshot image to be collected at each scan position, or
continuously changing the scan position and gating a detector on and off in synchronism with the required scan positions, thus enabling a snapshot image to be collected at each required scan position; and
a distance between spatially adjacent stationary scan positions u,v on any single or combined coordinate axis is arranged to be substantially less than a native optical resolution of the confocal scanning system; wherein
a region of interest (ROI) with pixel dimensions p,q is centred on each of the multiple returned beams from the sample at coordinates x,y in an image in the array of images Muv, forming an array of ROIs Txy; and repeated for each image in the image array Muv, such that the arrays of multiple returned beams at positions x,y shifted by the scan positions u,v cover the whole of the sample area j,k with illumination beams which are separated by substantially less than the native optical resolution of the confocal scanning system; and
pixel intensities I(Spq) recorded within each of the ROIs in the array of ROI arrays Txy at each stationary beam scan position u,v are loaded into the appropriate elements of the four-dimensional array I(R(u+x,v+y),Spq) according to the scan position u,v and ROI centre position x,y after testing that the values of u+x and v+y lie within the sample field of view dimensions j and k respectively, and
processed to produce an effective image, the effective image further processed by Fourier transformation, filtered with a weighting function equivalent to an enhanced point spread function, then reverse Fourier transformed into a spatial equivalent to produce a final image which exhibits enhanced spatial resolution, the effective image leff(Rjk) being equal to summation intensities for app p,q of I(Rjk-(Spq/2), Spq), wherein
image scanning is normally achieved by one or more rotating discs containing a spatial filter consisting of an array of confocal apertures, with or without a matching microlens array, and arranged such that one rotation of the disc assembly will scan the whole sample area at least once, wherein
the scan pattern is modified such that the pattern of apertures and /or microlenses on each of the multiple spirals on the discs are offset from the pattern on each of the other spirals such that in a full revolution of the discs the total scan lines generated by the apertures and / or microlenses are separated by sub optical resolution increments along the radial axis (d) of the scan.

6. A confocal scanning system according to any preceding claim, wherein
the testing and loading of the intensity data from the multiple ROIs at each scan position u,v into the appropriate elements of the array I(Ru+x,v+y)Spq) is processed in a parallel fashion while data is being collected.

7. A confocal scanning system according to any of claims 1 to 5, wherein
the testing and loading of the intensity data from the multiple ROIs at each scan position u,v into the appropriate elements of the array I(Ru+x,v+y)Spq) is processed either partially or wholly post image capture.

## Patentansprüche

1. Konfokales Abtastsystem, in dem ein konfokales Bild erzeugt wird, indem eine Probe mit mehreren beleuchtenden Lichtstrahlen abgetastet wird, die durch einen räumlichen Filter in einem Beleuchtungslichtweg zu einer Probenbrennebene erzeugt werden, und ein reflektiertes oder fluoreszierendes Licht, das von der Probe zurückgegeben wird, durch einen passenden räumlichen Filter gefiltert wird, um ein konfokales Bild an einem zweidimensionalen Detektor zu bilden,
und **dadurch gekennzeichnet, dass**
ein elektronisches oder Computersteuersystem in das mehrstrahlige Abtastsystem integriert ist, um die folgenden Ereignisse zu synchronisieren und zu steuern:
Steuern der mehrstrahligen Beleuchtung, sodass sie stationär erscheint, wenn ein Bild durch den zweidimensionalen Detektor an mehreren Positionen u,v in einer Probe erfasst wird, indem Bilderfassung zu einem stationären Muster von Beleuchtungspunkten in der Probe synchronisiert und das Bild durch den zweidimensionalen Detektor an jeder stationären Position erfasst wird, wodurch eine Reihe an Bildern Muv gebildet wird durch:
Inkrementieren einer Abtastposition Schritt für Schritt und Erfassen eines Bildes nach jedem Schritt, oder
durchgehendes Ändern der Abtastposition und Pulsieren der Beleuchtung ein und aus synchron mit erforderlichen Abtastpositionen, wodurch die Abtastbewegung effektiv angehalten und ermöglicht wird, dass ein Schnappschussbild an jeder Abtastposition gesammelt wird, oder
durchgehendes Ändern der Abtastposition und Ein- und Ausschalten eines Detektors synchron mit den erforderlichen Abtastpositionen, wodurch ermöglicht wird, dass ein Schnappschussbild an jeder erforderlichen Abtastposition gesammelt wird; und
ein Abstand zwischen räumlich benachbarten stationären Abtastpositionen u,v auf einer beliebigen einzelnen oder kombinierten Koordinatenachse angeordnet ist, sodass er im Wesentlichen weniger als eine native optische Auflösung des konfokalen Abtastsystems ist; wobei
eine Region von Interesse (ROI) mit Pixelabmessungen p,q an jedem der mehreren zurückgegebenen Strahlen von der Probe an Koordinaten x,y in einem Bild in der Reihe an Bildern Muv zentriert ist, wodurch eine Reihe an ROIs Txy gebildet wird; und für jedes Bild in der Bildreihe Muv wiederholt wird, sodass die Reihen mehrerer zurückgegebener Strahlen an Positionen x,y verschoben durch die Abtastpositionen u,v den gesamten Bereich j,k mit Beleuchtungsstrahlen bedecken, die durch im Wesentlichen weniger als die native optische Auflösung des konfokalen Abtastsystems getrennt sind; und
Pixelintensitäten I(Spq), die innerhalb jeder der ROIs in der Reihe an ROI-Reihen Txy an jeder stationären Strahlabtastposition u,v aufgezeichnet werden, in die entsprechenden Elemente der vierdimensionalen Reihe I(R(u+x,v+y),Spq) gemäß der Abtastposition u,v und der ROI-Mittelposition x,y geladen werden, nach dem Testen, dass die Werte von u+x und v+y innerhalb des Probenfeldes jeweils der Ansichtsdimensionen j und k liegen, und
verarbeitet, um ein effektives Bild zu erzeugen, wobei das effektive Bild ferner verarbeitet wird durch FourierTransformation, gefiltert mit einer Gewichtungsfunktion äquivalent zu einer verbesserten Punktstreufunktion, dann umgekehrt in ein räumliches Äquivalent Fourier-transformiert, um ein finales Bild zu erzeugen, das verbesserte räumliche Auflösung aufweist, wobei das effektive Bild Ieff(Rjk) gleich Summierungsintensitäten für App p, q von I(Rjk-(Spq/2), Spq) ist, wobei
das suboptische Auflösungsinkrement auf einer oder beiden Achsen erzeugt wird durch:
präzise und genaue Steuerung von einem oder mehreren Antriebsmechanismen, die jeweils einen Galvanometerabtastspiegel tragen, der in den Beleuchtungs- und zurückkehrenden Lichtstrahlen platziert ist, oder
Bewegen der räumlichen Beleuchtungs- und Erfassungsfilter entlang ihrer passenden Achsen mit präziser und genauer Steuerung von einem oder mehreren Verschiebungsmechanismen, die aus Vorrichtungen bestehen, die eines von einer Piezoverschiebungsvorrichtung, einem linearen Motor, einem Stufenmotor oder einem Drehmotor an jeder Reihe umfassen, oder
präzise und genaue Steuerung von einem oder mehreren Antriebsmechanismen, die jeweils den Neigungswinkel eines geneigten optischen Fensters steuern, das in den Beleuchtungs- und zurückkehrenden Lichtstrahlen positioniert ist, durch die die Strahlen seitlich durch eine Änderung des Neigungswinkels des Fensters verschoben werden.

2. Konfokales Abtastsystem, in dem ein konfokales Bild erzeugt wird, indem eine Probe mit mehreren beleuchtenden Lichtstrahlen abgetastet wird, die durch einen räumlichen Filter in einem Beleuchtungslichtweg zu einer Probenbrennebene erzeugt werden, und ein reflektiertes oder fluoreszierendes Licht, das von der Probe zurückgegeben wird, durch einen passenden räumlichen Filter gefiltert wird, um ein konfokales Bild an einem zweidimensionalen Detektor zu bilden,
und **dadurch gekennzeichnet, dass**
ein elektronisches oder Computersteuersystem in das mehrstrahlige Abtastsystem integriert ist, um die folgenden Ereignisse zu synchronisieren und zu steuern:
Steuern der mehrstrahligen Beleuchtung, sodass sie stationär erscheint, wenn ein Bild durch den zweidimensionalen Detektor an mehreren Positionen u,v in einer Probe erfasst wird, indem Bilderfassung zu einem stationären Muster von Beleuchtungspunkten in der Probe synchronisiert und das Bild durch den zweidimensionalen Detektor an jeder stationären Position erfasst wird, wodurch eine Reihe an Bildern Muv gebildet wird durch:
Inkrementieren einer Abtastposition Schritt für Schritt und Erfassen eines Bildes nach jedem Schritt, oder
durchgehendes Ändern der Abtastposition und Pulsieren der Beleuchtung ein und aus synchron mit erforderlichen Abtastpositionen, wodurch die Abtastbewegung effektiv angehalten und ermöglicht wird, dass ein Schnappschussbild an jeder Abtastposition gesammelt wird, oder
durchgehendes Ändern der Abtastposition und Ein- und Ausschalten eines Detektors synchron mit den erforderlichen Abtastpositionen, wodurch ermöglicht wird, dass ein Schnappschussbild an jeder erforderlichen Abtastposition gesammelt wird; und
ein Abstand zwischen räumlich benachbarten stationären Abtastpositionen u,v auf einer beliebigen einzelnen oder kombinierten Koordinatenachse angeordnet ist, sodass er im Wesentlichen weniger als eine native optische Auflösung des konfokalen Abtastsystems ist; wobei
eine Region von Interesse (ROI) mit Pixelabmessungen p,q an jedem der mehreren zurückgegebenen Strahlen von der Probe an Koordinaten x,y in einem Bild in der Reihe an Bildern Muv zentriert ist, wodurch eine Reihe an ROIs Txy gebildet wird; und für jedes Bild in der Bildreihe Muv wiederholt wird, sodass die Reihen an mehreren zurückgegebenen Strahlen an Positionen x,y verschoben durch die Abtastpositionen u,v den gesamten Bereich j,k mit Beleuchtungsstrahlen bedecken, die durch im Wesentlichen weniger als die native optische Auflösung des konfokalen Abtastsystems getrennt sind; und
Pixelintensitäten I(Spq), die innerhalb jeder der ROIs in der Reihe an ROI-Reihen Txy an jeder stationären Strahlabtastposition u,v aufgezeichnet werden, in die entsprechenden Elemente der vierdimensionalen Reihe I(R(u+x,v+y),Spq) gemäß der Abtastposition u,v und der ROI-Mittelposition x,y geladen werden, nach dem Testen, dass die Werte von u+x und v+y innerhalb des Probenfeldes jeweils der Ansichtsdimensionen j und k liegen, und
verarbeitet, um ein effektives Bild zu erzeugen, wobei das effektive Bild ferner verarbeitet wird durch FourierTransformation, gefiltert mit einer Gewichtungsfunktion äquivalent zu einer verbesserten Punktstreufunktion, dann umgekehrt in ein räumliches Äquivalent Fourier-transformiert, um ein finales Bild zu erzeugen, das verbesserte räumliche Auflösung aufweist, wobei das effektive Bild Ieff(Rjk) gleich Summierungsintensitäten für App p,q von I(Rjk-(Spq/2), Spq) ist, wobei
Bildabtasten durch eine oder mehrere Drehscheiben erreicht wird, die einen räumlichen Filter enthalten, der aus einer Reihe an konfokalen Öffnungen besteht, mit oder ohne einer passenden Mikrolinsenreihe, und derart angeordnet ist, dass eine Drehung der Scheibenbaugruppe bewirkt, dass die beleuchtenden Strahlen den gesamten Probebereich zumindest einmal abtasten, wobei
die Drehabtastung modifiziert wird, um die beleuchtenden Strahlen durch die Probe in suboptischen Auflösungsinkrementen entlang beider Achsen zu durchkämmen, wobei (u,v) zu (d, theta) einer kombinierten radialen Verschiebung und Drehwinkelabtastung werden, mit Positionen von Öffnungen in dem räumlichen Filter beschrieben durch (r,phi) anstelle von (x,y); und
das suboptische Auflösungsabtastinkrement entlang der Drehachse durch präzise Kenntnis des Drehwinkels der Drehscheibe(n) erzeugt wird, über Verfahren, die das Montieren eines Encoders mit hoher Auflösung an der Welle der Scheibe(n), an der Antriebsmotorwelle oder Codierung an der/den Scheibe(n) umfassen; und
das suboptische Auflösungsabtastinkrement entlang der radialen Verschiebungsachse durch präzise und genaue Steuerung eines Antriebsmechanismus erzeugt wird, der einen Abtastspiegel trägt; umfassend einen galvanometerangetriebenen Spiegel, durch präzise und genaue Steuerung des Neigungswinkels eines geneigten optischen Fensters, das in den beleuchtenden und zurückkehrenden Lichtstrahlen positioniert ist; oder Verschiebung der Drehmitte der Teilbaugruppe der Drehscheibe(n) mit präziser und genauer Steuerung eines Verschiebungsmechanismus, der eine Piezoverschiebungsvorrichtung, einen linearen Motor oder einen Drehmotor umfasst.

3. Konfokales Abtastsystem, in dem ein konfokales Bild erzeugt wird, indem eine Probe mit mehreren beleuchtenden Lichtstrahlen abgetastet wird, die durch einen räumlichen Filter in einem Beleuchtungslichtweg zu einer Probenbrennebene erzeugt werden, und ein reflektiertes oder fluoreszierendes Licht, das von der Probe zurückgegeben wird, durch einen passenden räumlichen Filter gefiltert wird, um ein konfokales Bild an einem zweidimensionalen Detektor zu bilden,
und **dadurch gekennzeichnet, dass**
ein elektronisches oder Computersteuersystem in das mehrstrahlige Abtastsystem integriert ist, um die folgenden Ereignisse zu synchronisieren und zu steuern:
Steuern der mehrstrahligen Beleuchtung, sodass sie stationär erscheint, wenn ein Bild durch den zweidimensionalen Detektor an mehreren Positionen u,v in einer Probe erfasst wird, indem Bilderfassung zu einem stationären Muster von Beleuchtungspunkten in der Probe synchronisiert und das Bild durch den zweidimensionalen Detektor an jeder stationären Position erfasst wird, wodurch eine Reihe an Bildern Muv gebildet wird durch:
Inkrementieren einer Abtastposition Schritt für Schritt und Erfassen eines Bildes nach jedem Schritt, oder
durchgehendes Ändern der Abtastposition und Pulsieren der Beleuchtung ein und aus synchron mit erforderlichen Abtastpositionen, wodurch die Abtastbewegung effektiv angehalten und ermöglicht wird, dass ein Schnappschussbild an jeder Abtastposition gesammelt wird, oder
durchgehendes Ändern der Abtastposition und Ein- und Ausschalten eines Detektors synchron mit den erforderlichen Abtastpositionen, wodurch ermöglicht wird, dass ein Schnappschussbild an jeder erforderlichen Abtastposition gesammelt wird; und
ein Abstand zwischen räumlich benachbarten stationären Abtastpositionen u,v auf einer beliebigen einzelnen oder kombinierten Koordinatenachse angeordnet ist, sodass er im Wesentlichen weniger als eine native optische Auflösung des konfokalen Abtastsystems ist; wobei
eine Region von Interesse (ROI) mit Pixelabmessungen p,q an jedem der mehreren zurückgegebenen Strahlen von der Probe an Koordinaten x,y in einem Bild in der Reihe an Bildern Muv zentriert ist, wodurch eine Reihe an ROIs Txy gebildet wird; und für jedes Bild in der Bildreihe Muv wiederholt wird, sodass die Reihen an mehreren zurückgegebenen Strahlen an Positionen x,y verschoben durch die Abtastpositionen u,v den gesamten Bereich j,k mit Beleuchtungsstrahlen bedecken, die durch im Wesentlichen weniger als die native optische Auflösung des konfokalen Abtastsystems getrennt sind; und
Pixelintensitäten I(Spq), die innerhalb jeder der ROIs in der Reihe an ROI-Reihen Txy an jeder stationären Strahlabtastposition u,v aufgezeichnet werden, in die entsprechenden Elemente der vierdimensionalen Reihe I(R(u+x,v+y),Spq) gemäß der Abtastposition u,v und der ROI-Mittelposition x,y geladen werden, nach dem Testen, dass die Werte von u+x und v+y innerhalb des Probenfeldes jeweils der Ansichtsdimensionen j und k liegen, und
verarbeitet, um ein effektives Bild zu erzeugen, wobei das effektive Bild ferner verarbeitet wird durch FourierTransformation, gefiltert mit einer Gewichtungsfunktion äquivalent zu einer verbesserten Punktstreufunktion, dann umgekehrt in ein räumliches Äquivalent Fourier-transformiert, um ein finales Bild zu erzeugen, das verbesserte räumliche Auflösung aufweist, wobei das effektive Bild Ieff(Rjk) gleich Summierungsintensitäten für App p,q von I(Rjk-(Spq/2), Spq) ist, wobei
Bildabtasten normalerweise durch Durchkämmen eines räumlichen Filters erreicht wird, der aus einer eindimensionalen Reihe an konfokalen Öffnungen besteht, mit oder ohne einer passenden Mikrolinsenreihe, derart angeordnet, dass die Abtastung der eindimensionalen Reihe mit einer Amplitude oszilliert, die etwas weniger als die Beabstandung zwischen den Öffnungen der Reihe ist, sodass eine Halbperiode der Oszillation, die mehrere Durchkämmungen der eindimensionalen Reihe enthält, bewirkt, dass die beleuchtenden Strahlen den Probebereich zumindest einmal abtasten, wobei die Positionierung der Strahlen von der eindimensionalen Reihe ausreichend präzise und genau gemacht ist, um Abstufung suboptischer Auflösung auf einer oder beiden Achsen zwischen aufeinanderfolgenden Bilderfassungen zu ermöglichen, durch präzise und genaue Steuerung von einem oder mehreren Antriebsmechanismen, die jeweils einen Abtastspiegel tragen, der in den Beleuchtungs- und zurückkehrenden Lichtstrahlen platziert ist, umfassend einen galvanometerangetriebenen Spiegel oder einen piezogesteuerten Spiegel.

4. Konfokales Abtastsystem, in dem ein konfokales Bild erzeugt wird, indem eine Probe mit mehreren beleuchtenden Lichtstrahlen abgetastet wird, die durch einen räumlichen Filter in einem Beleuchtungslichtweg zu einer Probenbrennebene erzeugt werden, und ein reflektiertes oder fluoreszierendes Licht, das von der Probe zurückgegeben wird, durch einen passenden räumlichen Filter gefiltert wird, um ein konfokales Bild an einem zweidimensionalen Detektor zu bilden,
und **dadurch gekennzeichnet, dass**
ein elektronisches oder Computersteuersystem in das mehrstrahlige Abtastsystem integriert ist, um die folgenden Ereignisse zu synchronisieren und zu steuern:
Steuern der mehrstrahligen Beleuchtung, sodass sie stationär erscheint, wenn ein Bild durch den zweidimensionalen Detektor an mehreren Positionen u,v in einer Probe erfasst wird, indem Bilderfassung zu einem stationären Muster von Beleuchtungspunkten in der Probe synchronisiert und das Bild durch den zweidimensionalen Detektor an jeder stationären Position erfasst wird, wodurch eine Reihe an Bildern Muv gebildet wird durch:
Inkrementieren einer Abtastposition Schritt für Schritt und Erfassen eines Bildes nach jedem Schritt, oder
durchgehendes Ändern der Abtastposition und Pulsieren der Beleuchtung ein und aus synchron mit erforderlichen Abtastpositionen, wodurch die Abtastbewegung effektiv angehalten und ermöglicht wird, dass ein Schnappschussbild an jeder Abtastposition gesammelt wird, oder
durchgehendes Ändern der Abtastposition und Ein- und Ausschalten eines Detektors synchron mit den erforderlichen Abtastpositionen, wodurch ermöglicht wird, dass ein Schnappschussbild an jeder erforderlichen Abtastposition gesammelt wird; und
ein Abstand zwischen räumlich benachbarten stationären Abtastpositionen u,v auf einer beliebigen einzelnen oder kombinierten Koordinatenachse angeordnet ist, sodass er im Wesentlichen weniger als eine native optische Auflösung des konfokalen Abtastsystems ist; wobei
eine Region von Interesse (ROI) mit Pixelabmessungen p,q an jedem der mehreren zurückgegebenen Strahlen von der Probe an Koordinaten x,y in einem Bild in der Reihe an Bildern Muv zentriert ist, wodurch eine Reihe an ROIs Txy gebildet wird; und für jedes Bild in der Bildreihe Muv wiederholt wird, sodass die Reihen an mehreren zurückgegebenen Strahlen an Positionen x,y verschoben durch die Abtastpositionen u,v den gesamten Bereich j,k mit Beleuchtungsstrahlen bedecken, die durch im Wesentlichen weniger als die native optische Auflösung des konfokalen Abtastsystems getrennt sind; und
Pixelintensitäten I(Spq), die innerhalb jeder der ROIs in der Reihe an ROI-Reihen Txy an jeder stationären Strahlabtastposition u,v aufgezeichnet werden, in die entsprechenden Elemente der vierdimensionalen Reihe I(R(u+x,v+y),Spq) gemäß der Abtastposition u,v und der ROI-Mittelposition x,y geladen werden, nach dem Testen, dass die Werte von u+x und v+y innerhalb des Probenfeldes jeweils der Ansichtsdimensionen j und k liegen, und
verarbeitet, um ein effektives Bild zu erzeugen, wobei das effektive Bild ferner verarbeitet wird durch FourierTransformation, gefiltert mit einer Gewichtungsfunktion äquivalent zu einer verbesserten Punktstreufunktion, dann umgekehrt in ein räumliches Äquivalent Fourier-transformiert, um ein finales Bild zu erzeugen, das verbesserte räumliche Auflösung aufweist, wobei das effektive Bild Ieff(Rjk) gleich Summierungsintensitäten für App p,q von I(Rjk-(Spq/2), Spq) ist, wobei
Bildabtasten normalerweise erreicht wird, indem ein räumlicher Filter durchkämmt wird, der aus einer zweidimensionalen Reihe an konfokalen Öffnungen besteht, mit oder ohne einer passenden Mikrolinsenreihe, derart angeordnet, dass eine einzelne Durchkämmung der Reihe bewirkt, dass die beleuchtenden Strahlen den Probebereich zumindest einmal abtasten, wobei
das Muster der zweidimensionalen Reihe an konfokalen Öffnungen und passenden Beleuchtungsöffnungen und/oder Mikrolinsen modifiziert wird, sodass die Anzahl an identischen Teilmustern mit einer Verschiebung jedes Teilmusters orthogonal zu der normalen Abtastrichtung kombiniert wird, um eine einzelne Abtastdurchkämmung zu erzeugen, bei der effektiv benachbarte Abtastzeilen durch die Probenebene durch die beleuchtenden Strahlen um einen suboptischen Auflösungsabstand voneinander verschoben werden.

5. Konfokales Abtastsystem, in dem ein konfokales Bild erzeugt wird, indem eine Probe mit mehreren beleuchtenden Lichtstrahlen abgetastet wird, die durch einen räumlichen Filter in einem Beleuchtungslichtweg zu einer Probenbrennebene erzeugt werden, und ein reflektiertes oder fluoreszierendes Licht, das von der Probe zurückgegeben wird, durch einen passenden räumlichen Filter gefiltert wird, um ein konfokales Bild an einem zweidimensionalen Detektor zu bilden,
und **dadurch gekennzeichnet, dass**
ein elektronisches oder Computersteuersystem in das mehrstrahlige Abtastsystem integriert ist, um die folgenden Ereignisse zu synchronisieren und zu steuern:
Steuern der mehrstrahligen Beleuchtung, sodass sie stationär erscheint, wenn ein Bild durch den zweidimensionalen Detektor an mehreren Positionen u,v in einer Probe erfasst wird, indem Bilderfassung zu einem stationären Muster von Beleuchtungspunkten in der Probe synchronisiert und das Bild durch den zweidimensionalen Detektor an jeder stationären Position erfasst wird, wodurch eine Reihe an Bildern Muv gebildet wird durch:
Inkrementieren einer Abtastposition Schritt für Schritt und Erfassen eines Bildes nach jedem Schritt, oder
durchgehendes Ändern der Abtastposition und Pulsieren der Beleuchtung ein und aus synchron mit erforderlichen Abtastpositionen, wodurch die Abtastbewegung effektiv angehalten und ermöglicht wird, dass ein Schnappschussbild an jeder Abtastposition gesammelt wird, oder
durchgehendes Ändern der Abtastposition und Ein- und Ausschalten eines Detektors synchron mit den erforderlichen Abtastpositionen, wodurch ermöglicht wird, dass ein Schnappschussbild an jeder erforderlichen Abtastposition gesammelt wird; und
ein Abstand zwischen räumlich benachbarten stationären Abtastpositionen u,v auf einer beliebigen einzelnen oder kombinierten Koordinatenachse angeordnet ist, sodass er im Wesentlichen weniger als eine native optische Auflösung des konfokalen Abtastsystems ist; wobei
eine Region von Interesse (ROI) mit Pixelabmessungen p,q an jedem der mehreren zurückgegebenen Strahlen von der Probe an Koordinaten x,y in einem Bild in der Reihe an Bildern Muv zentriert ist, wodurch eine Reihe an ROIs Txy gebildet wird; und für jedes Bild in der Bildreihe Muv wiederholt wird, sodass die Reihen an mehreren zurückgegebenen Strahlen an Positionen x,y verschoben durch die Abtastpositionen u,v den gesamten Bereich j,k mit Beleuchtungsstrahlen bedecken, die durch im Wesentlichen weniger als die native optische Auflösung des konfokalen Abtastsystems getrennt sind; und
Pixelintensitäten I(Spq), die innerhalb jeder der ROIs in der Reihe an ROI-Reihen Txy an jeder stationären Strahlabtastposition u,v aufgezeichnet werden, in die entsprechenden Elemente der vierdimensionalen Reihe I(R(u+x,v+y),Spq) gemäß der Abtastposition u,v und der ROI-Mittelposition x,y geladen werden, nach dem Testen, dass die Werte von u+x und v+y innerhalb des Probenfeldes jeweils der Ansichtsdimensionen j und k liegen, und
verarbeitet, um ein effektives Bild zu erzeugen, wobei das effektive Bild ferner verarbeitet wird durch FourierTransformation, gefiltert mit einer Gewichtungsfunktion äquivalent zu einer verbesserten Punktstreufunktion, dann umgekehrt in ein räumliches Äquivalent Fourier-transformiert, um ein finales Bild zu erzeugen, das verbesserte räumliche Auflösung aufweist, wobei das effektive Bild Ieff(Rjk) gleich Summierungsintensitäten für App p,q von I(Rjk-(Spq/2), Spq) ist, wobei
Bildabtasten normalerweise durch eine oder mehrere Drehscheiben erreicht wird, die einen räumlichen Filter enthalten, der aus einer Reihe an konfokalen Öffnungen besteht, mit oder ohne einer passenden Mikrolinsenreihe, und derart angeordnet ist, dass eine Drehung der Scheibenbaugruppe den gesamten Probebereich zumindest einmal abtastet, wobei
das Abtastmuster modifiziert wird, sodass das Muster aus Öffnungen und/oder Mikrolinsen an jeder von den mehreren Spiralen an den Scheiben von dem Muster an jeder von den anderen Spiralen versetzt werden, sodass bei einer vollen Drehung der Scheiben die gesamten Abtastzeilen, die durch die Öffnungen und/oder Mikrolinsen erzeugt werden, durch suboptische Auflösungsinkremente entlang der radialen Achse (d) der Abtastung getrennt werden.

6. Konfokales Abtastsystem nach einem vorhergehenden Anspruch, wobei
das Testen und Laden der Intensitätsdaten von den mehreren ROIs an jeder Abtastposition u,v in die entsprechenden Elemente der Reihe I(Ru+x,v+y)Spq) auf eine parallele Weise verarbeitet wird, während Daten gesammelt werden.

7. Konfokales Abtastsystem nach einem der Ansprüche 1 bis 5, wobei
das Testen und Laden der Intensitätsdaten von den mehreren ROIs an jeder Abtastposition u,v in die entsprechenden Elemente der Reihe I(Ru+x,v+y)Spq) entweder teilweise oder vollständig nach der Bilderfassung verarbeitet wird.

## Revendications

1. Système de lecture confocale dans lequel une image confocale est générée en lisant un échantillon avec de multiples faisceaux lumineux d'éclairage créés par un filtre spatial dans un trajet lumineux d'éclairage jusqu'à un plan focal d'échantillon et une lumière réfléchie ou fluorescente renvoyée par l'échantillon est filtrée par un filtre spatial correspondant pour former une image confocale au niveau d'un détecteur bidimensionnel
et **caractérisé en ce que**
un système de commande électronique ou informatique est intégré au système de lecture multifaisceaux pour synchroniser et commander les événements suivants ;
la commande de l'éclairage multifaisceaux pour qu'il apparaisse stationnaire lorsqu'une image est capturée par le détecteur bidimensionnel dans des positions multiples u, v dans un échantillon en synchronisant la capture d'image avec un motif stationnaire de points d'éclairage dans l'échantillon et en capturant l'image par le biais du détecteur bidimensionnel dans chaque position stationnaire formant un réseau d'images Muv :
en augmentant une position de lecture pas à pas et en capturant une image après chaque étape, ou
en modifiant la position de lecture en continu et en allumant et en éteignant l'éclairage de manière synchronisée avec les positions de lecture requises, ce qui arrête ainsi efficacement le mouvement de lecture et permet de collecter une image instantanée dans chaque position de lecture, ou
en modifiant en continu la position de lecture et en activant et en désactivant un détecteur de manière synchronisée avec les positions de lecture requises, ce qui permet ainsi de collecter une image instantanée dans chaque position de lecture requise ; et
une distance entre des positions de lecture stationnaires adjacentes dans l'espace u, v sur n'importe quel axe de coordonnées unique ou combiné est agencée pour être sensiblement inférieure à une résolution optique native du système de lecture confocale ; dans lequel
une région d'intérêt (ROI) avec des dimensions de pixels p, q est centrée sur chacun des multiples faisceaux renvoyés par l'échantillon aux coordonnées x, y dans une image dans le réseau d'images Muv, formant un réseau de ROI Txy ; et répété pour chaque image dans le réseau d'images Muv, de sorte que les réseaux de multiples faisceaux renvoyés aux positions x, y décalées par les positions de lecture u, v couvrent l'ensemble de la zone d'échantillon j, k avec des faisceaux d'éclairage qui sont séparés par sensiblement moins que la résolution optique native du système de lecture confocale ; et
des intensités de pixels I(Spq) enregistrées dans chacune des ROI du réseau de réseaux de ROI Txy dans chaque position de lecture de faisceau stationnaire u, v sont chargées dans les éléments appropriés du réseau quadridimensionnel I(R(u+x, v+y),Spq) en fonction de la position de lecture u, v et de la position centrale de ROI x, y après avoir vérifié que les valeurs de u+x et v+y se situent respectivement dans les dimensions du champ de vision d'échantillon j et k, et
traitées pour produire une image efficace, l'image efficace étant en outre traitée par transformation de Fourier, filtrée avec une fonction de pondération équivalente à une fonction d'étalement de points améliorée, puis est l'objet d'une transformation inverse de Fourier en un équivalent spatial pour produire une image finale qui présente une résolution spatiale améliorée, l'image efficace Ieff(Rjk) étant égale aux intensités de sommation pour app p, q de I(Rjk-(Spq/2), Spq), dans lequel
l'incrément de résolution optique secondaire sur un ou les deux axes est produit par :
une commande précise et exacte d'un ou de plusieurs mécanismes d'entraînement comportant chacun un miroir à lecture galvanométrique, placé dans les faisceaux lumineux d'éclairage et de retour, ou
le déplacement des filtres spatiaux d'éclairage et de détection le long de leurs axes correspondants avec une commande précise et exacte d'un ou de plusieurs mécanismes de déplacement composés de dispositifs comprenant l'un d'un dispositif de déplacement piézoélectrique, d'un moteur linéaire, d'un moteur pas à pas ou d'un moteur rotatif sur chaque réseau, ou
la commande précise et exacte d'un ou de plusieurs mécanismes d'entraînement, chacun commandant l'angle d'inclinaison d'une fenêtre optique inclinée positionnée dans les faisceaux lumineux d'éclairage et de retour au moyen de laquelle les faisceaux sont décalés latéralement par un changement de l'angle d'inclinaison de la fenêtre.

2. Système de lecture confocale dans lequel une image confocale est générée en lisant un échantillon avec de multiples faisceaux lumineux d'éclairage créés par un filtre spatial dans un trajet lumineux d'éclairage jusqu'à un plan focal d'échantillon et une lumière réfléchie ou fluorescente renvoyée par l'échantillon est filtrée par un filtre spatial correspondant pour former une image confocale au niveau d'un détecteur bidimensionnel
et **caractérisé en ce que**
un système de commande électronique ou informatique est intégré au système de lecture multifaisceaux pour synchroniser et commander les événements suivants ;
la commande de l'éclairage multifaisceaux pour qu'il apparaisse stationnaire lorsqu'une image est capturée par le détecteur bidimensionnel dans des positions multiples u, v dans un échantillon en synchronisant la capture d'image avec un motif stationnaire de points d'éclairage dans l'échantillon et en capturant l'image par le biais du détecteur bidimensionnel dans chaque position stationnaire formant un réseau d'images Muv :
en augmentant une position de lecture pas à pas et en capturant une image après chaque étape, ou
en modifiant la position de lecture en continu et en allumant et en éteignant l'éclairage de manière synchronisée avec les positions de lecture requises, ce qui arrête ainsi efficacement le mouvement de lecture et permet de collecter une image instantanée dans chaque position de lecture, ou
en modifiant en continu la position de lecture et en activant et en désactivant un détecteur de manière synchronisée avec les positions de lecture requises, ce qui permet ainsi de collecter une image instantanée dans chaque position de lecture requise ; et
une distance entre des positions de lecture stationnaires adjacentes dans l'espace u, v sur n'importe quel axe de coordonnées unique ou combiné est agencée pour être sensiblement inférieure à une résolution optique native du système de lecture confocale ; dans lequel
une région d'intérêt (ROI) avec des dimensions de pixels p, q est centrée sur chacun des multiples faisceaux renvoyés par l'échantillon aux coordonnées x, y dans une image dans le réseau d'images Muv, formant un réseau de ROI Txy ; et répété pour chaque image dans le réseau d'images Muv, de sorte que les réseaux de multiples faisceaux renvoyés aux positions x, y décalées par les positions de lecture u, v couvrent l'ensemble de la zone d'échantillon j, k avec des faisceaux d'éclairage qui sont séparés par sensiblement moins que la résolution optique native du système de lecture confocale ; et
des intensités de pixels I(Spq) enregistrées dans chacune des ROI du réseau de réseaux de ROI Txy dans chaque position de lecture de faisceau stationnaire u, v sont chargées dans les éléments appropriés du réseau quadridimensionnel I(R(u+x, v+y),Spq) en fonction de la position de lecture u, v et de la position centrale de ROI x, y après avoir vérifié que les valeurs de u+x et v+y se situent respectivement dans les dimensions du champ de vision d'échantillon j et k, et
traitées pour produire une image efficace, l'image efficace étant en outre traitée par transformation de Fourier, filtrée avec une fonction de pondération équivalente à une fonction d'étalement de points améliorée, puis est l'objet d'une transformation inverse de Fourier en un équivalent spatial pour produire une image finale qui présente une résolution spatiale améliorée, l'image efficace Ieff(Rjk) étant égale aux intensités de sommation pour app p, q de I(Rjk-(Spq/2), Spq), dans lequel
la lecture d'image est réalisée par un ou plusieurs disques rotatifs contenant un filtre spatial composé d'un réseau d'ouvertures confocales, avec ou sans réseau de microlentilles correspondant, et agencé de sorte qu'une rotation de l'ensemble de disque amènera les faisceaux d'éclairage à lire toute la zone de l'échantillon au moins une fois, dans lequel
la lecture de rotation est modifiée pour balayer les faisceaux d'éclairage à travers l'échantillon par incréments de résolution optique secondaire le long des deux axes, où (u, v) deviennent (d, thêta) d'un déplacement radial combiné et d'une lecture d'angle de rotation, avec des positions d'ouvertures dans le filtre spatial décrites par (r, phi) à la place de (x, y) ; et
l'incrément de lecture à résolution optique secondaire le long de l'axe de rotation est produit par une connaissance précise de l'angle de rotation du ou des disques rotatifs via des méthodes comprenant le montage d'un codeur haute résolution sur l'arbre du ou des disques ou sur l'arbre de moteur d'entraînement, ou l'encodage sur le ou les disques ; et
l'incrément de lecture à résolution optique secondaire le long de l'axe de déplacement radial est produit par une commande précise et exacte d'un mécanisme d'entraînement comportant un miroir de lecture ; comprenant un miroir entraîné par un galvanomètre, par la commande précise et exacte de l'angle d'inclinaison d'une fenêtre optique inclinée positionnée dans les faisceaux lumineux d'éclairage et de retour ; ou déplacement du centre de rotation du sous-ensemble du ou des disques rotatifs avec la commande précise et exacte d'un mécanisme de déplacement comprenant un dispositif de déplacement piézoélectrique, un moteur linéaire ou un moteur rotatif.

3. Système de lecture confocale dans lequel une image confocale est générée en lisant un échantillon avec de multiples faisceaux lumineux d'éclairage créés par un filtre spatial dans un trajet lumineux d'éclairage jusqu'à un plan focal d'échantillon et une lumière réfléchie ou fluorescente renvoyée par l'échantillon est filtrée par un filtre spatial correspondant pour former une image confocale au niveau d'un détecteur bidimensionnel
et **caractérisé en ce que**
un système de commande électronique ou informatique est intégré au système de lecture multifaisceaux pour synchroniser et commander les événements suivants ;
la commande de l'éclairage multifaisceaux pour qu'il apparaisse stationnaire lorsqu'une image est capturée par le détecteur bidimensionnel dans des positions multiples u, v dans un échantillon en synchronisant la capture d'image avec un motif stationnaire de points d'éclairage dans l'échantillon et en capturant l'image par le biais du détecteur bidimensionnel dans chaque position stationnaire formant un réseau d'images Muv :
en augmentant une position de lecture pas à pas et en capturant une image après chaque étape, ou
en modifiant la position de lecture en continu et en allumant et en éteignant l'éclairage de manière synchronisée avec les positions de lecture requises, ce qui arrête ainsi efficacement le mouvement de lecture et permet de collecter une image instantanée dans chaque position de lecture, ou
en modifiant en continu la position de lecture et en activant et en désactivant un détecteur de manière synchronisée avec les positions de lecture requises, ce qui permet ainsi de collecter une image instantanée dans chaque position de lecture requise ; et
une distance entre des positions de lecture stationnaires adjacentes dans l'espace u, v sur n'importe quel axe de coordonnées unique ou combiné est agencée pour être sensiblement inférieure à une résolution optique native du système de lecture confocale ; dans lequel
une région d'intérêt (ROI) avec des dimensions de pixels p, q est centrée sur chacun des multiples faisceaux renvoyés par l'échantillon aux coordonnées x, y dans une image dans le réseau d'images Muv, formant un réseau de ROI Txy ; et répété pour chaque image dans le réseau d'images Muv, de sorte que les réseaux de multiples faisceaux renvoyés aux positions x, y décalées par les positions de lecture u, v couvrent l'ensemble de la zone d'échantillon j, k avec des faisceaux d'éclairage qui sont séparés par sensiblement moins que la résolution optique native du système de lecture confocale ; et
des intensités de pixels I(Spq) enregistrées dans chacune des ROI du réseau de réseaux de ROI Txy dans chaque position de lecture de faisceau stationnaire u, v sont chargées dans les éléments appropriés du réseau quadridimensionnel I(R(u+x,v+y),Spq) en fonction de la position de lecture u, v et de la position centrale de ROI x, y après avoir vérifié que les valeurs de u+x et v+y se situent respectivement dans les dimensions du champ de vision d'échantillon j et k, et
traitées pour produire une image efficace, l'image efficace étant en outre traitée par transformation de Fourier, filtrée avec une fonction de pondération équivalente à une fonction d'étalement de points améliorée, puis est l'objet d'une transformation inverse de Fourier en un équivalent spatial pour produire une image finale qui présente une résolution spatiale améliorée, l'image efficace Ieff(Rjk) étant égale aux intensités de sommation pour app p, q de I(Rjk-(Spq/2),Spq), dans lequel
la lecture d'image est normalement obtenue en balayant un filtre spatial composé d'un réseau unidimensionnel d'ouvertures confocales, avec ou sans réseau de microlentilles correspondant, agencé de sorte que la lecture de réseau unidimensionnel oscille avec une amplitude juste inférieure à l'espacement entre les ouvertures du réseau, de sorte qu'une demi-période de l'oscillation contenant de multiples balayages du réseau unidimensionnel amène les faisceaux d'éclairage à lire la zone de l'échantillon au moins une fois, dans lequel le positionnement des faisceaux depuis le réseau unidimensionnel est rendu suffisamment précis et exact pour permettre un étagement de résolution optique secondaire sur un ou les deux axes entre des captures d'image successives, par une commande précise et exacte d'un ou de plusieurs mécanismes d'entraînement comportant chacun un miroir de lecture placé dans les faisceaux lumineux d'éclairage et de retour, comprenant un miroir entraîné par un galvanomètre ou un miroir à commande piézoélectrique.

4. Système de lecture confocale dans lequel une image confocale est générée en lisant un échantillon avec de multiples faisceaux lumineux d'éclairage créés par un filtre spatial dans un trajet lumineux d'éclairage jusqu'à un plan focal d'échantillon et une lumière réfléchie ou fluorescente renvoyée par l'échantillon est filtrée par un filtre spatial correspondant pour former une image confocale au niveau d'un détecteur bidimensionnel
et **caractérisé en ce que**
un système de commande électronique ou informatique est intégré au système de lecture multifaisceaux pour synchroniser et commander les événements suivants ;
la commande de l'éclairage multifaisceaux pour qu'il apparaisse stationnaire lorsqu'une image est capturée par le détecteur bidimensionnel dans des positions multiples u, v dans un échantillon en synchronisant la capture d'image avec un motif stationnaire de points d'éclairage dans l'échantillon et en capturant l'image par le biais du détecteur bidimensionnel dans chaque position stationnaire formant un réseau d'images Muv :
en augmentant une position de lecture pas à pas et en capturant une image après chaque étape, ou
en modifiant la position de lecture en continu et en allumant et en éteignant l'éclairage de manière synchronisée avec les positions de lecture requises, ce qui arrête ainsi efficacement le mouvement de lecture et permet de collecter une image instantanée dans chaque position de lecture, ou
en modifiant en continu la position de lecture et en activant et en désactivant un détecteur de manière synchronisée avec les positions de lecture requises, ce qui permet ainsi de collecter une image instantanée dans chaque position de lecture requise ; et
une distance entre des positions de lecture stationnaires adjacentes dans l'espace u, v sur n'importe quel axe de coordonnées unique ou combiné est agencée pour être sensiblement inférieure à une résolution optique native du système de lecture confocale ; dans lequel
une région d'intérêt (ROI) avec des dimensions de pixels p, q est centrée sur chacun des multiples faisceaux renvoyés par l'échantillon aux coordonnées x, y dans une image dans le réseau d'images Muv, formant un réseau de ROI Txy ; et répété pour chaque image dans le réseau d'images Muv, de sorte que les réseaux de multiples faisceaux renvoyés aux positions x, y décalées par les positions de lecture u, v couvrent l'ensemble de la zone d'échantillon j, k avec des faisceaux d'éclairage qui sont séparés par sensiblement moins que la résolution optique native du système de lecture confocale ; et
des intensités de pixels I(Spq) enregistrées dans chacune des ROI du réseau de réseaux de ROI Txy dans chaque position de lecture de faisceau stationnaire u, v sont chargées dans les éléments appropriés du réseau quadridimensionnel I(R(u+x,v+y),Spq) en fonction de la position de lecture u, v et de la position centrale de ROI x, y après avoir vérifié que les valeurs de u+x et v+y se situent respectivement dans les dimensions du champ de vision d'échantillon j et k, et
traitées pour produire une image efficace, l'image efficace étant en outre traitée par transformation de Fourier, filtrée avec une fonction de pondération équivalente à une fonction d'étalement de points améliorée, puis est l'objet d'une transformation inverse de Fourier en un équivalent spatial pour produire une image finale qui présente une résolution spatiale améliorée, l'image efficace Ieff(Rjk) étant égale aux intensités de sommation pour app p, q de I(Rjk-(Spq/2), Spq), dans lequel
la lecture d'image est normalement obtenue en balayant un filtre spatial composé d'un réseau bidimensionnel d'ouvertures confocales, avec ou sans réseau de microlentilles correspondant, et agencé de sorte qu'un balayage unique du réseau amène les faisceaux d'éclairage à lire la zone de l'échantillon au moins une fois, dans lequel
le motif de réseau bidimensionnel des ouvertures confocales et des ouvertures d'éclairage et/ou des microlentilles correspondants est modifié de sorte que le nombre de sous-motifs identiques est combiné avec un décalage de chaque sous-motif perpendiculairement à la direction de lecture normale pour créer un balayage de lecture unique dans lequel des lignes de lecture effectivement adjacentes traversant le plan d'échantillon à côté des faisceaux d'éclairage sont déplacées les unes des autres d'une distance de résolution optique secondaire.

5. Système de lecture confocale dans lequel une image confocale est générée en lisant un échantillon avec de multiples faisceaux lumineux d'éclairage créés par un filtre spatial dans un trajet lumineux d'éclairage jusqu'à un plan focal d'échantillon et une lumière réfléchie ou fluorescente renvoyée par l'échantillon est filtrée par un filtre spatial correspondant pour former une image confocale au niveau d'un détecteur bidimensionnel
et **caractérisé en ce que**
un système de commande électronique ou informatique est intégré au système de lecture multifaisceaux pour synchroniser et commander les événements suivants ;
la commande de l'éclairage multifaisceaux pour qu'il apparaisse stationnaire lorsqu'une image est capturée par le détecteur bidimensionnel dans des positions multiples u, v dans un échantillon en synchronisant la capture d'image avec un motif stationnaire de points d'éclairage dans l'échantillon et en capturant l'image par le biais du détecteur bidimensionnel dans chaque position stationnaire formant un réseau d'images Muv :
en augmentant une position de lecture pas à pas et en capturant une image après chaque étape, ou
en modifiant la position de lecture en continu et en allumant et en éteignant l'éclairage de manière synchronisée avec les positions de lecture requises, ce qui arrête ainsi efficacement le mouvement de lecture et permet de collecter une image instantanée dans chaque position de lecture, ou
en modifiant en continu la position de lecture et en activant et en désactivant un détecteur de manière synchronisée avec les positions de lecture requises, ce qui permet ainsi de collecter une image instantanée dans chaque position de lecture requise ; et
une distance entre des positions de lecture stationnaires adjacentes dans l'espace u, v sur n'importe quel axe de coordonnées unique ou combiné est agencée pour être sensiblement inférieure à une résolution optique native du système de lecture confocale ; dans lequel
une région d'intérêt (ROI) avec des dimensions de pixels p, q est centrée sur chacun des multiples faisceaux renvoyés par l'échantillon aux coordonnées x, y dans une image dans le réseau d'images Muv, formant un réseau de ROI Txy ; et répété pour chaque image dans le réseau d'images Muv, de sorte que les réseaux de multiples faisceaux renvoyés aux positions x, y décalées par les positions de lecture u, v couvrent l'ensemble de la zone d'échantillon j, k avec des faisceaux d'éclairage qui sont séparés par sensiblement moins que la résolution optique native du système de lecture confocale ; et
des intensités de pixels I(Spq) enregistrées dans chacune des ROI du réseau de réseaux de ROI Txy dans chaque position de lecture de faisceau stationnaire u, v sont chargées dans les éléments appropriés du réseau quadridimensionnel I(R(u+x,v+y),Spq) en fonction de la position de lecture u, v et de la position centrale de ROI x, y après avoir vérifié que les valeurs de u+x et v+y se situent respectivement dans les dimensions du champ de vision d'échantillon j et k, et
traitées pour produire une image efficace, l'image efficace étant en outre traitée par transformation de Fourier, filtrée avec une fonction de pondération équivalente à une fonction d'étalement de points améliorée, puis est l'objet d'une transformation inverse de Fourier en un équivalent spatial pour produire une image finale qui présente une résolution spatiale améliorée, l'image efficace Ieff(Rjk) étant égale aux intensités de sommation pour app p, q de I(Rjk-(Spq/2), Spq), dans lequel
la lecture d'image est normalement réalisée par un ou plusieurs disques rotatifs contenant un filtre spatial composé d'un réseau d'ouvertures confocales, avec ou sans réseau de microlentilles correspondant, et agencé de sorte qu'une rotation de l'ensemble de disque lira toute la zone de l'échantillon au moins une fois, dans lequel
le motif de lecture est modifié de sorte que le motif des ouvertures et/ou des microlentilles sur chacune des multiples spirales sur les disques est décalé par rapport au motif sur chacune des autres spirales de sorte que lors d'un tour complet des disques, la totalité des lignes de lecture générées par les ouvertures et/ou les microlentilles sont séparées par des incréments de résolution optique secondaire le long de l'axe radial (d) du balayage.

6. Système de lecture confocale selon une quelconque revendication précédente, dans lequel
le test et le chargement des données d'intensité provenant des multiples ROI dans chaque position de lecture u, v dans les éléments appropriés du réseau I(Ru+x,v+y)Spq) est traité de façon parallèle pendant la collecte des données.

7. Système de lecture confocale selon l'une quelconque des revendications 1 à 5, dans lequel
le test et le chargement des données d'intensité provenant des multiples ROI dans chaque position de lecture u, v dans les éléments appropriés du réseau I(Ru+x,v+y)Spq) est traité partiellement ou entièrement après la capture d'image.
